## Europäisches Patentamt
## European Patent Office
## Office européen des brevets

(11) Veröffentlichungsnummer: **0 316 281 B1**

(12) **EUROPÄISCHE PATENTSCHRIFT**

(19)

(12)

(45) Veröffentlichungstag der Patentschrift:
**12.06.91 Patentblatt 91/24**

(21) Anmeldenummer: **88810769.5**

(22) Anmeldetag: **09.11.88**

(51) Int. Cl.⁵: **A01J 27/00, A01J 25/16**

(54) Verfahren zum automatischen Bearbeiten von Käselaiben und Maschine zur Durchführung des Verfahrens.

(30) Priorität: **12.11.87 CH 4424/87**

(43) Veröffentlichungstag der Anmeldung:
**17.05.89 Patentblatt 89/20**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**EP-A- 0 120 811**

(56) Entgegenhaltungen:
**EP-A- 0 154 044**
**DE-A- 2 622 812**
**FR-A- 1 510 850**
**FR-A- 2 555 018**

(73) Patentinhaber: **RINO WEDER AG**
**Hylpertstrasse**
**CH-9463 Oberriet (CH)**

(72) Erfinder: **Gächter, Cölestin**
**Maadstrasse 391**
**CH-9464 Rüthi (CH)**

(74) Vertreter: **Riederer, Conrad A., Dr.**
**Bahnhofstrasse 10**
**CH-7310 Bad Ragaz (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zum automatischen Bearbeiten von Käselaiben, welche auf wegnehmbaren Tragplatten in Lagegestellen eines Käselagers angeordnet sind, wobei die Bearbeitung mittels einer längs eines Lagergestells verfahrbaren Maschine erfolgt, durch welche jeweils mindestens ein Käselaib auf einer Tragplatte von einem Lagergestell zur Maschine transferiert wird, wo der zu bearbeitende Käselaib an einer Entladestation von der Tragplatte abgeladen und einer Bearbeitungsstation zugeführt, dort bearbeitet, wieder auf eine Tragplatte abgelegt und dann auf dieser in das Lagergestell zurückgeführt wird.

Aus der EP-A 0 154 044 ist eine Maschine zum Waschen von Käse bekannt, bei welcher hochkant angeordnete Käselaibe durch ein Förderband durch eine Bearbeitungsstation geführt werden, in welcher auf beiden Seiten sowie unten rotierende Bürsten angeordnet sind. Während des Durchgangs werden die Käselaibe von Düsen mit einem Käseschmiermittel besprüht. Nachteilig erweist sich dabei, dass die Maschine stationär ist, die Käselaibe von den Lagergestellen von Hand entnommen und auch wieder von Hand zurückgeführt werden müssen. Für gewisse Käsesorten ist es auch nachteilig, wenn die Käselaibe oben un unten befeuchtet werden.

Im Handel sind auch fahrbare Maschinen erhältlich. Diese Maschinen haben den Vorteil, dass sie entlang eines Lagergestells verfahren werden können, so dass lange Transportwege für die Käselaibe vom Lagergestell vermieden werden. In der EP-A 0 120 811 wird eine Maschine beschrieben, die eine Beschickungsanlage aufweist, mit welcher die auf einem Brett lagernden Käselaibe samt dem Brett vom Lagergestell entnommen und auf eine Aufnahmevorrichtung der Maschine gelegt werden. Das Brett wird dann geschwenkt und die Käselaibe auf eine zur Horizontalen geneigten Flachbürste geschoben. Beim anschliessenden Schrägstellen gleiten die Käselaiben auf der Flachbürste, bis ein ausreichender Kontakt mit einem Paar ungleich schnell rotierender Rundbürsten erfolgt. Durch diese Rundbürsten erfolgt ein Rotieren der Käselaibe auf der Flachbürste, wobei gleichzeitig eine Schmierung des Randes und der Unterseite der Käselaibe erfolgt. Nach beendeter Schmierung wird die Flachbürste in die horizontale Lage gebracht. Infolge verminderter Reibung an den Rundbürsten und erhöhter Reibung an der Flachbürste hören die Käselaibe auf zu drehen. Sie werden dann mit einer Gabel gewendet und wieder zurück auf das Brett gelegt, das sich immer noch in Schwenklage befindet. Hierauf werden das Brett mit den geschmierten Käselaiben in die horizontale und die Flachbürste in die geneigte Ausgangslage zurückgebracht. Schliesslich wird das Brett mit den geschmierten Laiben in das Lagergestell zurückgeführt, worauf dann die Maschine horizontal bewegt und/oder die Hebebühne vertikal verfahren wird, um ein neues Brett mit zu schmierenden Käselaiben dem Gestell zu entnehmen.

Die bekannte Maschine weist erhebliche Nachteile auf. Besonders nachteilig ist, dass zur Bearbeitung einer Charge, also der auf einem Brett gelagerten Käselaibe, sehr viel Zeit benötigt wird. Nachteilig ist auch, dass nur runde Käselaibe geschmiert werden können. Es ist nicht möglich, viereckige Käselaibe zu schmieren, weil diese von der Rundbürste nicht in Rotation versetzt werden können. Probleme bietet auch die richtige Einstellung des Neigungswinkels der Flachbürste, weil die Reibungsverhältnisse sowohl von Käsealter zu Käsealter als auch von Käsesorte zu Käsesorte verschieden sind und sich zudem noch individuell verändern können. Durch die dadurch verursachten Störungen wird die ohnehin geringe Produktivität noch weiterhin verschlechtert. Ferner erfordert die notwendige ständige Ueberwachung und Regulierung der Maschine ein besonders geschicktes und zuverlässiges Bedienungspersonal. Ein weiteres Problem stellt die starke Abnutzung der feuchten Bretter durch die Greifvorrichtung der Maschine dar. Das durch die Flüssigkeit durchnässte Holz ist weich und fasert leicht aus.

Von besonderem Nachteil ist schliesslich noch der Umstand, dass die Maschine nur von einer Seite her Bretter erfassen kann und daher vor der Bearbeitung eines Lagergestells auf der anderen Seite eines Ganges gewendet werden muss.

Es ist daher Aufgabe der vorliegenden Erfindung, mindestens einen Teil der geschilderten Nachteile zu vermeiden. Insbesondere soll die Produktivität und Zuverlässigkeit der Maschine gesteigert werden. Sowohl Käselaibe als auch die Tragplatten oder Bretter sollen schonend behandelt werden.

Erfindungsgemäss wird dies bei einem Verfahren der eingangs erwähnten Art dadurch erreicht, dass die leere Tragplatte von der Entladestation zu einer Ladestation geführt wird, dass ein bearbeiteter Käselaib von der Bearbeitungsstation zur Ladestation geführt und dort auf die Tragplatte geladen wird, und dass während der Bearbeitung des Käselaibs in der Bearbeitungsstation ein Transfer einer Tragplatte mit einem bearbeiteten Käselaib zum Lagergestell und ein Transfer einer Tragplatte mit einem neu zu bearbeitenden Käselaib zur Maschine erfolgt.

Mit diesem Verfahren ist es möglich, gleichzeitig mehrere Operationen auszuführen. Dadurch ergibt sich eine erhebliche Zeitersparnis, so dass der notwendige Zeitaufwand im Vergleich zum vorbekannten Verfahren rund die Hälfte beträgt. So ist es beispielsweise möglich, während der Bearbeitung des Käselaibes in der Bearbeitungsstation einen Transfer einer Tragplatte mit einem bearbeiteten Käselaib zum Lagergestell und einen Transfer einer Tragplatte mit einem neu zu bearbeitenden Käselaib zur Maschine durchzuführen.

Vorteilhaft wird der bearbeitete Käselaib vor dem Transfer in ein Lagergestell in eine Wartestation gebracht. Dies ermöglicht eine besonders rationelle Durchführung des Verfahrens. Es ist möglich, die Tragplatte, mit welcher der zu bearbeitende Käselaib zur Maschine geführt wird, nachher zur Aufnahme eines bearbeiteten Käselaibs aus der Wartestation und zum Transfer dieses Käselaibs in ein Lagergestell zu benützen. Auch diese Verfahrensweise trägt stark zur rationellen Durchführung der notwendigen Operationen bei.

Die Erfindung betrifft auch eine Käsebearbeitungsmaschine zur Durchführung des erfindungsgemässen Verfahrens. Diese Käsebearbeitungsmaschine besitzt einen auf einem Fahrweg längs des Lagergestells verfahrbaren Wagen, welcher eine Transfervorrichtung zum Transfer von Tragplatten von und zum Lagergestell, eine Hubvorrichtung für die Transfervorrichtung, eine Bearbeitungsstation zum Bearbeiten von Käselaiben und eine Fördervorrichtung zum Fördern der Käselaibe von einer Tragplatte zur Bearbeitungsstation und zurück auf eine Tragplatte und ist gekennzeichnet durch eine Entladestation, um den zu bearbeitenden Käselaib von der Tragplatte abzuladen und der Bearbeitungsstation zuzuführen, und einer Ladestation, um den bearbeiteten Käselaib auf eine leere Tragplatte aufzuladen.

Mit dieser Maschine wird das körperlich anstrengende Transportieren von Käselaiben vermieden. Da mit ihr gleichzeitig mehrere Operationen ausgeführt werden, ergibt sich auch eine erhebliche Zeitersparnis.

Vorteilhaft weist die Transfervorrichtung einen von einem Schlittenantrieb antreibbaren Schlitten auf, auf welchem mindestens ein von einem Förderbandantrieb antreibbares Förderband angeordnet ist, wobei zur Entnahme oder Ablage einer Tragplatte mit Käselaiben der Schlitten zusammen mit dem Förderband ein Stück weit in das Lagergestell eingefahren werden kann. Dies ermöglicht einen sicheren Transfer vom Lagergestell zur Maschine und umgekehrt. Dabei ist es besonders vorteilhaft, wenn die Maschine derart ausgebildet ist, dass beim Transport einer Tragplatte vom Lagergestell zur Maschine die Transfervorrichtung den Schlitten mit dem Förderband in einem Abstand von der Unterseite der Tragplatte in das Lagergestell einführt, worauf dann die Hubvorrichtung die Transfervorrichtung anhebt und das Förderband in Kontakt mit der Tragplatte bringt. Bei einer solchen Ausbildung der der Maschine spielt es keine Rolle, wenn die Tragplatte unter dem Gewicht eines Käselaibes etwas durchhängt. Weiter wird sichergestellt, dass keine Relativbewegung zwischen Förderband und Tragplatte stattfindet. Dadurch wird ein Verschleiss der Tragplatte weitgehend verhindert. Es ist nämlich zu beachten, dass die Tragplatten in der Regel Holzbretter sind und diese Holzbretter durch die feuchten Käselaibe feucht werden. Durch die Feuchtigkeit wird das Holz etwas aufgeweicht und ist daher besonders verschleissanfällig. Um einen Verschleiss auch beim Ablegen der Tragplatte von der Maschine in das Lagergestell zu verhindern, ist die Maschine vorteilhaft auch so ausgebildet, dass die Hubvorrichtung die Transfervorrichtung absenkt und das Förderband ausser Kontakt mit der Tragplatte bringt, worauf der Schlitten mit dem Förderband zurückgefahren wird. Auch wenn die Tragplatte unter dem Gewicht der Käselaibe etwas durchhängt, besteht keine Gefahr einer Relativbewegung zwischen Förderband und Tragplatte und dementsprechend ist auch der Verschleiss an der Tragplatte gering.

Zweckmässigerweise weist die Transfervorrichtung eine synchron mit dem Förderband verschiebbare Klemmvorrichtung zum Erfassen einer Tragplatte auf. Dies trägt erheblich zum einwandfreien Funktionieren der Maschine bei.

Vorteilhaft ist die Transfervorrichtung sowohl links als auch rechts zur Fahrrichtung des Wagens ausfahrbar. In diesem Fall ist es möglich sowohl ein links als auch ein rechts des Fahrweges des Wagens angeordnetes Lagergestell zu bedienen, ohne dass der Wagen gekehrt werden muss. Dabei ist zweckmässigerweise die Transfervorrichtung so ausgebildet, dass vor der Entnahme einer Tragplatte aus dem linken oder rechten Lagergestell die Klemmvorrichtung durch den Förderbandantrieb in eine linke bzw. rechte Bereitschaftsstellung verstellbar ist. Es ist dann nicht nötig, zwei separate Klemmvorrichtungen oder gar zwei separate Transfervorrichtungen vorzusehen.

Zweckmässigerweise weist die Bearbeitungsstation für jeden Käselaib mindestens eine rotierende Bürste und mindestens eine Düse zur Zufuhr von Käseschmiermittel auf. Zweckmässigerweise wird jedoch je eine rotierende Bürste und je eine Düse für die obere Fläche des Käselaibs und je eine rotierende Bürste und je eine Düse für die Seitenfläche des Käselaibs vorgesehen. Dies erlaubt eine gründliche und rationelle Bearbeitung. Die Fördervorrichtung weist zweckmässigerweise mindestens einen Entladearm zum Entladen der Tragplatte und zum Beschicken der Wendevorrichtung vor. Dadurch wird ein manuelles Entladen unnötig gemacht. Aus dem gleichen Grunde erweist es sich auch als zweckmässig, wenn die Fördervorrichtung einen Förderwagen zum Fördern der Käselaibe von der Bearbeitungsstation zur Wartestation aufweist. Dabei wird auch vorteilhaft vorgesehen, dass die Fördervorrichtung einen Ladearm zum Laden der Käselaibe von der Wartestation auf eine Tragplatte auf der Transfervorrichtung aufweist.

Auf dem Förderwagen wird vorteilhaft zum Drehen des jeweiligen Käselaibs in der Bearbeitungsstation ein Drehtisch vorgesehen. Dies ermöglicht eine saubere Bearbeitung der Käselaibe von allen Seiten.

Eine elektronische Steuerung kann verwendet werden, um den Bewegungsablauf der verschiedenen Organe der Maschine zu steuern.

Ein Ausführungsbeispiel der Erfindung wird nun unter Bezugnahme auf die schematische Zeichnung beschrieben. Es zeigt:

Figur 1 die Käsebearbeitungsmaschine,

Figur 2 eine Frontansicht der Käsebearbeitungsmaschine in einem Gang zwischen zwei Lagergestellen, wobei zur Vereinfachung jedoch nur die Transferstation in mehreren Details gezeigt wird, und

Figur 3 eine Frontansicht wie in Figur 2, wobei aber die Transfervorrichtung dabei ist, eine Tragplatte mit Käselaiben zu übernehmen.

Wie die schematische Darstellung zeigt, besitzt die Maschine 10 eine Bearbeitungsstation 11 zum Bearbeiten von Käselaiben 13, eine Transfervorrichtung 15 zum Transfer von Tragplatten 17 mit Käselaiben 13 von einem Lagergestell 25, eine Hubvorrichtung 19 zum Auf- und Abwärtsbewegen der Transfervorrichtung 15, sowie eine noch näher zu beschreibende Fördervorrichtung 18 zum Fördern der Käselaibe 13 weg von der Tragplatte 17 auf der Transfervorrichtung 15 zur Bearbeitungsstation 11 und wieder zurück. Alle diese Einheiten oder Organe befinden sich auf einem Wagen 21. Dieser Wagen 21 kann auf einem Fahrweg 23 zwischen zwei Lagergestellen 25 bewegt werden. In diesen Lagergestellen 25 befinden sich eine Anzahl von Tragplatten 17 mit Käselaiben 13.

Als Tragplatten 17 werden in der Regel Holzbretter verwendet. In der Regel finden auf einem solchen Holzbrett 17 mehrere Käselaibe Platz. Die Maschine ist zweckmässigerweise so ausgebildet, dass sie mehrere Käselaibe gleichzeitig bearbeiten kann. Es wäre aber auch möglich, die Maschine so zu gestalten, dass sie nur einen, z.B. sehr grossen Käselaib, von einer Tragplatte 17 aufnimmt und bearbeitet.

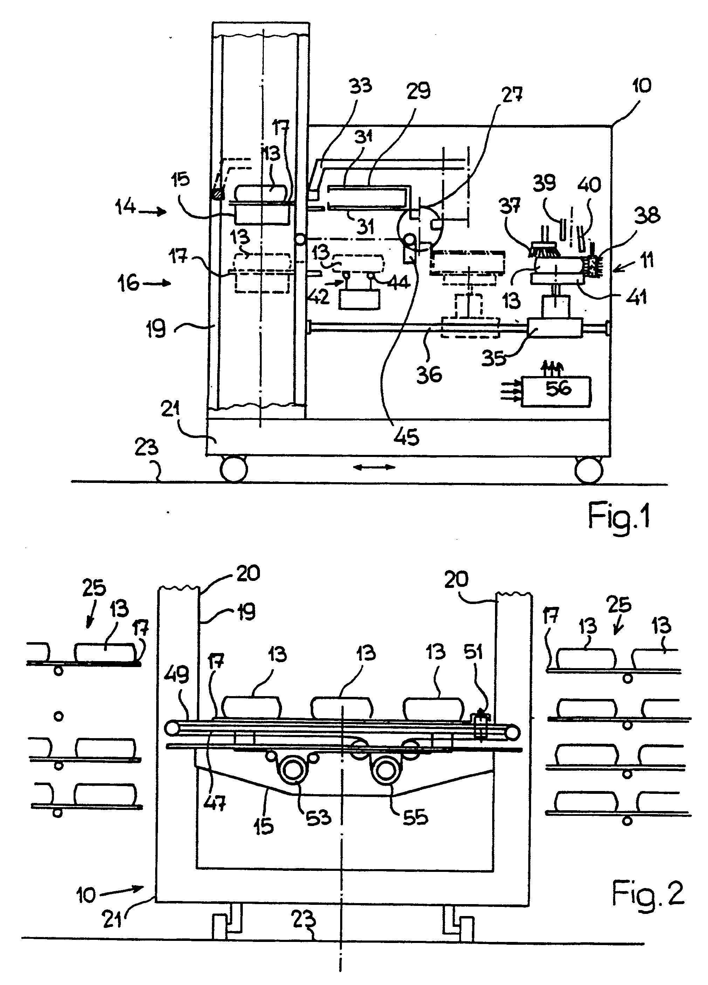

Wie Figur 1 zeigt, weist die Fördervorrichtung 18 eine Wendevorrichtung 27 auf. Diese Wendevorrichtung 27 besitzt einen um 180° verschwenkbaren Arm 29 mit zwei Gabeln 31, deren Abstand voneinander entsprechend der Höhe der zu bearbeitenden Käselaibe eingestellt werden kann. Der Transport der Käselaibe 13 von der Transferstation 15 in die Wendevorrichtung 27 erfolgt je mittels eines Ladearms 33, der beispielsweise von einem nichteingezeichneten pneumatischen Zylinder oder einem Elektromotor bewegbar ist. Von der Wendevorrichtung 27 gelangt der Käselaib 13 auf einen Förderwagen 35, welcher den Käselaib 13 zur Bearbeitungsstation 11 führt. Auf dem Förderwagen 35 ist für jeden gleichzeitig zu bearbeitenden Käselaib 13 ein Rotationstisch 41 vorgesehen.

In der Bearbeitungsstation 11 befinden sich zwei rotierende Bürsten 37, 38 und zwei Düsen 39, 40. Die Bürste 37 bearbeitet die obere Fläche des Käselaibs 13, währenddem die Bürste 38 die Seitenfläche des Käselaibs 13 bearbeitet. In entsprechender Weise führt die Düse 39 Käseschmiermittel der oberen Fläche des Käselaibs zu, während die Düse 40 Käseschmiermittel der Seitenfläche des Käselaibs 13 zuführt.

Der Förderwagen 35 wird nach dem Bearbeiten der Käselaibe 13 in die Wartestation 42 geführt, wo Hebearme 44 die Käselaibe von den Drehtischen 41 abheben und in eine Wartestellung bringen. Von der Wartestation 42 fährt der Förderwagen 35 in die strichpunktiert eingezeichnete Stellung bei der Wendevorrichtung 27, damit die Drehtische neue Käselaibe in Empfang nehmen können.

Ein entlang der strichpunktierten Linie 43 beweglicher Ladearm 45 dient dem Laden der Käselaibe 13 auf eine Tragplatte 17, wie dies nachher noch näher beschrieben wird.

Unter Bezugnahme auf Figur 2 wird nun die Transfervorrichtung 15 näher beschrieben. Diese Transfervorrichtung 15 ist durch die Hubvorrichtung 19, von der lediglich die Säulen 20 sichtbar sind, auf und ab bewegbar. Dies ermöglicht es der Transfervorrichtung 15, Tragplatten 17 mit Käselaiben 13 auf verschiedenen Höhen den Gestellen 25 zu entnehmen und dort wieder abzuladen. Mit der Hubvorrichtung 19 wird die Transfervorrichtung 15 jeweils auch zuerst zur Entladestation 14 gebracht, um zu bearbeitende Käselaibe 13 von der Tragplatte 17 abzuladen und dann zur Ladestation 16, um bearbeitete Käselaibe 13 auf die Tragplatte 17 aufzunehmen.

Die Transfervorrichtung 15 weist einen Schlitten 47 auf, auf welchem ein Förderband 49 angeordnet ist. Der Einfachheit halber wird lediglich von einem Förderband gesprochen. Zweckmässigerweise sind mehrere parallel zueinander angeordnete Förderbänder vorgesehen. Bei einer Bewegung des Förderbandes 49 wird auch eine Klemmvorrichtung 51 bewegt, die zum Erfassen einer Tragplatte dient. Je nach dem, ob eine Tragplatte aus dem linken Lagergestell 25 oder aus dem rechten Lagergestell 25 entnommen werden soll, wird die Klemmvorrichtung 51 in eine linke bzw. rechte Bereitschaftsstellung gebracht. Dem Antrieb des Schlittens 47 dient der Schlittenantriebmotor 53 und dem Antrieb des Förderbandes 49 dient der Förderbandantriebmotor 55.

Der gesamte Ablauf der verschiedenen Operationen wird durch die elektronische Steuerung 56 gesteuert.

Die Maschine arbeitet wie folgt: Gesteuert durch die elektronische Steuerung 56 fährt der Wagen 21 entlang des Fahrwegs 23 bis zu jener Stelle, wo sich die gewünschte Tragplatte 17 mit den zu behandelnden Käselaiben 13 befindet. Gleichzeitig bewegt die Hubvorrichtung 19 die Transfervorrichtung 15 in die richtige Höhenlage. Zur Entnahme der Tragplatte 17 mit den Laiben 13 bewegt sich dann der Schlitten 47 mit dem Förderband 49 in das Gestell hinein. Die Hubvorrichtung 19 bewirkt noch ein Anheben der Transfervorrichtung 15, so dass das Förderband 49 in Kontakt mit der Tragplatte 17 kommt. Durch die Klemmvorrichtung 51 wird die Tragplatte 17 erfasst. Die Motoren 53 und 55 bewegen dann sowohl den Schlitten 47 und das Förderband 49, bis sich die Tragplatte 17 in der in Figur 2 eingezeichneten Stellung befindet. Es ist zu beachten, dass beim gezeigten Beispiel eine Tragplatte aus dem linken Lagergestell 25 entnommen wurde. Es wäre aber auch möglich gewesen, eine Tragplatte 17 aus dem rechten Lagergestell 25 zu entnehmen. Dann hätte sich aber zu Beginn der Entnahme die Klemmvorrichtung 51 auf der rechten Seite befunden und hätte sich dann nach links bewegt.

Es ist nun wichtig festzuhalten, dass während dieses Entnahmevorgangs gleichzeitig eine Bearbeitung von Käselaiben 13 in der Bearbeitungsstation 11 stattfinden kann, wo die rotierenden Bürsten 37, 38 drehen und durch die Düsen 39, 40 Schmiermittel auf den Käselaib 13 geleitet wird. Gleichzeitig dreht sich auch der jeweilige Drehtisch 41.

Nach der Entnahme der Käselaibe 13 aus einem Gestell 25 werden die Käselaibe 13 mit dem Entladearm 33 von der Tragplatte 17 in die Wendevorrichtung 27 geladen. Die in der Zwischenzeit bearbeiteten Käselaibe 13 warten in der Wartestation 42. Nachdem durch die Hubvorrichtung 19 die Transfervorrichtung 15 aus der oberen Stellung 14 in die untere Stellung 16 bei der Wartestation 42 geführt wurde, kann der Ladearm 45 bearbeitete Käselaibe 13 auf die Tragplatte 17 schieben.

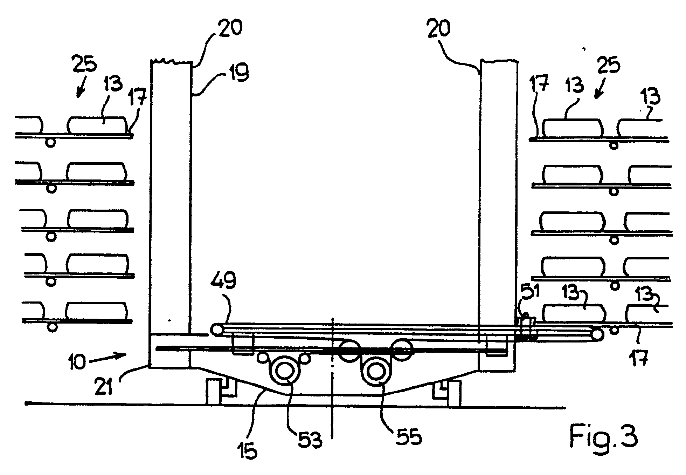

Von diesem Moment weg ist die Transfervorrichtung 15 bereit, die Tragplatte 17 mit den geschmierten Käselaiben 13 wieder am gewünschten Ort in einem Gestell 25 abzulegen. Gleichzeitig kann die Wendevorrichtung 27 neu zugeführte Käselaibe wenden und auf die Drehtische 41 auf dem Wagen 35 in der gestrichelt eingezeichneten Stellung unter der Wendevorrichtung 27 legen. Der Förderwagen 35 fährt dann mit den Käselaiben zur Bearbeitungsstation 11, wo die Bearbeitung in der vorher beschriebenen Weise durchgeführt wird, währenddem die bearbeiteten Käselaibe 13 zusammen mit der Tragplatte 17 im Lagergestell 25 versorgt und neu zu bearbeitende Käselaibe 13 zusammen mit einer Tragplatte 17 dem Lagergestell 25 entnommen werden (Fig. 3).

## Ansprüche

1. Verfahren zum automatischen Bearbeiten von Käselaiben (13), welche auf wegnehmbaren Tragplatten (17) in Lagergestellen eines Käselagers angeordnet sind, wobei die Bearbeitung mittels einer längs eines Lagergestells (25) verfahrbaren Maschine (10) erfolgt, durch welche jeweils mindestens ein Käselaib auf einer Tragplatte (17) von einem Lagergestell zur Maschine transferiert wird, wo der zu bearbeitende Käselaib (13) an einer Entladestation (14) von der Tragplatte abgeladen und einer Bearbeitungsstation (11) zugeführt, dort bearbeitet, wieder auf eine Tragplatte abgelegt und dann auf dieser in das Lagergestell zurückgeführt wird, dadurch gekennzeichnet, dass die leere Tragplatte (17) von der Entladestation (14) zu einer Ladestation (16) geführt wird, dass ein bearbeiteter Käselaib (13) von der Bearbeitungsstation (11) zur Ladestation (16) geführt und dort auf die Tragplatte (17) geladen wird, und dass während der Bearbeitung des Käselaibs (13) in der Bearbeitungsstation (11) ein Transfer einer Tragplatte (17) mit einem bearbeiteten Käselaib (13) zum Lagergestell (25) und ein Transfer einer Tragplatte (17) mit einem neu zu bearbeitenden Käselaib (13) zur Maschine (10) erfolgt.

2. Verfahren nach Anspruch 1, dadurch gekennzeichnet, dass der Käselaib (13) vor der Bearbeitung gewendet wird.

3. Verfahren nach einem der Ansprüche 1 bis 2, dadurch gekennzeichnet, dass der bearbeitete Käselaib (13) vor dem Transfer in ein Lagergestell (25) in eine Wartestation (42) gebracht wird.

4. Verfahren nach Anspruch 3, dadurch gekennzeichnet, dass die Tragplatte (17), mit welcher der zu bearbeitende Käselaib (13) zur Maschine (10) geführt wurde, nachher zur Aufnahme eines bearbeiteten Käselaibs (13) aus der Wartestation (42) und zum Transfer dieses Käselaibs (13) in ein Lagergestell (25) benützt wird.

5. Käsebearbeitungsmaschine zur Durchführung des Verfahrens, nach einem der Ansprüche 1 bis 4, mit einem auf einem Fahrweg (23) längs des Lagergestells (25) verfahrbaren Wagen (21), welcher eine Transfervorrichtung (15) zum Transfer von Tragplatten (17) von und zum Lagergestell (25), eine Hubvorrichtung (19) für die Transfervorrichtung (15), eine Bearbeitungsstation (11) zum Bearbeiten von Käselaiben (13) und eine Fördervorrichtung (18) zum Fördern der Käselaibe (13) von einer Tragplatte (17) zur Bearbeitungsstation (11) und zurück auf eine Tragplatte (17) aufweist, gekennzeichnet durch eine Entladestation (14), um den zu bearbeitenden Käselaib (13) von der Tragplatte (17) abzuladen und der Bearbeitungsstation (11) zuzuführen, und einer Ladestation (16), um den bearbeiteten Käselaib (13) auf eine leere Tragplatte (17) aufzuladen.

6. Maschine nach Anspruch 5, dadurch gekennzeichnet, dass die Transfervorrichtung (15) einen von einem Schlittenantrieb (53) antreibbaren Schlitten (47) aufweist, auf welchem mindestens ein von einem Förderbandantrieb (55) antreibbares Förderband (49) angeordnet ist, wobei zur Entnahme oder Ablage einer Tragplatte (17) mit Käselaiben (13) der Schlitten (47) zusammen mit dem Förderband (49) ein Stück weit in das Lagergestell (25) eingefahren werden kann.

7. Maschine nach Anspruch 6, dadurch gekennzeichnet, dass die Maschine derart ausgebildet ist, dass beim Transport einer Tragplatte (17) vom Lagergestell (25) zur Maschine die Transfervorrichtung (15) den Schlitten (47) mit dem Förderband (49) in einem Abstand von der Unterseite der Tragplatte (13) in das Lagergestell (25) einführt, worauf dann die Hubvorrichtung (19) die Transfervorrichtung (15) anhebt und das Förderband (49) in Kontakt mit der Tragplatte (17) bringt.

8. Maschine nach Anspruch 7, dadurch gekennzeichnet, dass sie derart ausgebildet ist, dass nach dem Transport einer Tragplatte (17) von der Maschine (10) in das Lagergestell (25) die Hubvorrichtung (19) die Transfervorrichtung (15) absenkt und das Förderband (49) ausser Kontakt mit der Tragplatte (17) bringt, worauf der Schlitten (47) mit dem Förderband (49) zurückgefahren wird.

9. Maschine nach einem der Ansprüche 5 bis 8, dadurch gekennzeichnet, dass die Transfervorrichtung (15) eine synchron mit dem Förderband (49) verschiebbare Klemmvorrichtung (51) zum Erfassen einer Tragplatte (17) aufweist.

10. Maschine nach einer der Ansprüche 5 bis 9, dadurch gekennzeichnet, dass die Fördervorrichtung (18) eine Wendevorrichtung (27) zum Wenden der Käselaibe (13) umfasst.

11. Maschine nach einem der Ansprüche 5 bis 10, mit je einem links und rechts des Fahrweges (23) des Wagens (21) angeordneten Lagergestell (25), dadurch gekennzeichnet, dass die Transfervorrichtung (15) sowohl links als auch rechts zur Fahrrichtung des Wagens (21) ausfahrbar ist.

12. Maschine nach Anspruch 11, dadurch gekennzeichnet, dass die Transfervorrichtung (15) so ausgebildet ist, dass vor der Entnahme einer Tragplatte (17) aus dem linken oder rechten Lagergestell (25) die Klemmvorrichtung (51) durch den Förderbandantrieb (55) in eine linke bzw. rechte Bereitschaftsstellung verstellbar ist.

13. Maschine nach einem der Ansprüche 5 bis 11, dadurch gekennzeichnet, dass die Bearbeitungsstation (11) für jeden Käselaib (13) mindestens eine rotierende Bürste (37, 38) und mindestens eine Düse (39, 40) zur Zufuhr von Käseschmiermittel aufweist.

14. Maschine nach einem der Ansprüche 5 bis 11, dadurch gekennzeichnet, dass die Fördervorrichtung (18) mindestens einen Entladearm (33) zum Entladen der Tragplatte (13) und Beschicken der Wendevorrichtung (29) aufweist.

15. Maschine nach einem der Ansprüche 5 bis 11, dadurch gekennzeichnet, dass die Fördervorrichtung (18) einen Förderwagen (35) zum Fördern der Käselaibe (13) von der Bearbeitungsstation (11) zur Wartestation (42) aufweist.

16. Maschine nach Anspruch 15, dadurch gekennzeichnet, dass die Fördervorrichtung (18) einen Ladearm (45) zum Laden der Käselaibe (13) von der Wartestation (42) auf eine Tragplatte (17) auf der Transfervorrichtung (15) aufweist.

17. Maschine nach Anspruch 14 oder 15, dadurch gekennzeichnet, dass auf dem Förderwagen (35) zum Drehen des jeweiligen Käselaibs (13) in der Bearbeitungsstation (11) ein Drehtisch (41) vorgesehen ist.

18. Maschine nach einem der Ansprüche 5 bis 17, gekennzeichnet durch eine elektronische Steuerung (56) zur Steuerung des Bewegungsablaufes der verschiedenen Organe der Maschine (10).

## Claims

1. A process for automatically treating whole cheeses (13) disposed on removable carrier plates (17) in storage frames of a cheese store, the cheeses being treated by means of a machine (10) movable along a storage frame (25), the machine (10) transferring at least one whole cheese at a time on a carrier plate (17) from a storage frame to the machine where the whole cheese (13) to be treated is unloaded from the carrier plate (17) at an unloading station (14) and supplied to a treatment station (11), treated therein, placed back on a carrier plate and returned thereon to the storage frame, characterised in that the empty carrier plate (17) is guided from the unloading station (14) to a loading station (16), a treated cheese (13) is guided from the treatment station (11) to the loading station (16) and loaded thereat on to the carrier plate (17) and during the processing of the cheese (13) in the treatment station (11) a carrier plate (17) carrying a treated whole cheese (13) is transferred to the storage frame (25) and a carrier plate (17) carrying a fresh cheese (13) to be treated is transferred to the machine (10).

2. A process according to claim 1, characterised in that the cheese (13) is turned before treatment.

3. A process according claims 1 and/or 2, characterised in that the treated cheese (13) is moved into a waiting station (42) before transfer to a storage frame (25).

4. A process according to claim 3, characterised in that the carrier plate (17) on which the cheese (13) to be treated is guided to the machine (10) is subsequently used to receive a treated cheese (13) from the waiting station (42) and to transfer the latter cheese (13) to a storage frame (25).

5. A cheese-treating machine for performing the process according to any of claims 1 to 4 and having a trolley or the like (21) movable on a path (23) along the storage frame (25) and having : means (15) for transferring carrier plates (17) from and to the storage frame (25), a lifter (19) for the transfer means (15) ; a treatment station (11) for processing cheeses (13) ; and means (18) for conveying the cheeses (13) from a carrier plate (17) to the treatment station (11) and back to a carrier plate (17), characterised by an unloading station (16) for unloading the cheese (13) to be treated from the carrier plate and supplying it to the treatment station (11), and by a loading station (16) to load the treated cheese (13) on to an empty carrier plate (17).

6. A machine according to claim 5, characterised in that the transfer means (15) have a carriage (17) which is drivable by a carriage drive (53) and on which at least one conveyor belt (49) drivable by a conveyor belt drive (55) is disposed, the carriage (47) together with the conveyor belt (49) being adapted to be introduced some distance into the storage frame (25) in order to remove or deposit a carrier plate (17) carrying cheeses (13).

7. A machine according to claim 6, characterised in that in the conveyance of a carrier plate (17) from the storage frame (25) to the machine the transfer means (15) introduce the carriage (47) with the conveyor belt (49) into the storage frame (25) at a distance from the underside of the carrier plate (17), whereafter the lifter (19) lifts the transfer means (15) end moves the conveyor belt (49) into contact with the carrier plate (17).

8. A machine according to claim 7, characterised in that after the conveyance of a carrier plate (17) from the machine (10) into the storage frame (25) the lifter (19) lowers the transfer means (15) and disengages the conveyor belt (49) from the carrier plate (17), whereafter the carriage (47) with the conveyor belt (49) is moved back.

9. A machine according to any of claims 5 to 8, characterised in that the transfer means (15) have clamping means (51) which are movable synchronously with the conveyor belt (49) in order to engage a carrier plate (17).

10. A machine according to any of claims 5 to 9, characterised in that the conveying means (18) have turning means (27) for turning the cheeses (13).

11. A machine according to any of claims 5 to 10 in which storage frames (25) are disposed one each to the left and to the right of the path (23) of the trolley (21), characterised in that the transfer means (15) can move out to the left and to the right of the direction of movement of the trolley (21).

12. A machine according to claim 11, characterised in that before a carrier plate (17) is removed from the left or right storage frame (25) the clamping means (51) can be moved by the conveyor belt drive (55) into a left or right standby position.

13. A machine according to any of claims 5 to 11, characterised in that the treatment station (11) has for each cheese (13) at least one rotating brush (37, 38) and at least one nozzle (39, 40) for supplying cheese lubricant.

14. A machine according to any of claims 5 to 11, characterised in that the conveying means (18) have at least one unloading arm (33) for unloading the carrier plate (13) and loading the turning means (29).

15. A machine according to any of claims 5 to 11, characterised in that the conveying means (18) have a conveying trolley (35) for conveying the cheeses (13) from the treatment station (11) to the waiting station (42).

16. A machine according to claim 15, characterised in that the conveying means (18) have a loading arm (45) for loading the cheeses (13) from the waiting station (42) on to a carrier plate (17) on the transfer means (15).

17. A machine according to claim 14 or 15, characterised in that a turntable (41) is provided on the trolley (35) for rotating the cheese (13) in the treatment station (11).

18. A machine according to any of claims 5 to 17, characterised by an electronic control (56) for controlling the movement sequence of the various elements of the machine (10).

## Revendications

1. Procédé pour le traitement automatique de meules de fromage (13) qui sont disposées sur des plateaux de support amovibles (17) dans des casiers de stockage d'un entrepôt de fromage, le traitement étant effectué au moyen d'une machine (10) qui est déplaçable le long d'un casier de stockage (25) et par laquelle une meule de fromage au moins, sur un plateau de support (17), est transférée chaque fois du casier de stockage vers la machine, où la meule de fromage à traiter (13) est déchargée du plateau de support dans un poste de déchargement (14) et est acheminée vers un poste de traitement (11), y est traitée, est redéposée sur un plateau de support, puis est ramenée sur celui-ci dans le casier de stockage, caractérisé en ce qu'à partir du poste de déchargement (14), le plateau de support vide (17) est dirigé vers un poste de chargement (16), en ce qu'une meule de fromage traitée (13) est dirigée, à partir du poste de traitement (11), vers le poste de chargement (16) et y est chargée sur le plateau de support (17), et en ce que pendant le traitement de la meule de fromage (13) dans le poste de traitement (11), il est effectué un transfert d'un plateau de support (17) avec une meule de fromage traitée (13) vers le casier de stockage (25) et un transfert d'un plateau de support (17) avec une nouvelle meule de fromage à traiter (13) vers la machine (10).

2. Procédé selon la revendication 1, caractérisé en ce que la meule de fromage (13) est retournée avant son traitement.

3. Procédé selon la revendication 1 ou 2, caractérisé en ce que la meule de fromage traitée (13) est placée dans un poste d'attente (42) avant son transfert dans un casier de stockage (25).

4. Procédé selon la revendication 3, caractérisé en ce que le plateau de support (17) avec lequel la meule de fromage à traiter (13) est dirigée vers la machine (10) est ensuite utilisé pour recevoir une meule de fromage traitée (13) à partir du poste d'attente (42) et pour transférer cette meule de fromage (13) dans le casier de stockage (25).

5. Machine de traitement de fromage pour l'exécution du procédé selon l'une quelconque des revendications 1 à 4, comportant un chariot (21) qui est déplaçable sur une voie de roulement (23) le long du casier de stockage (25) et qui présente un dispositif de transfert (15) pour le transfert de plateaux de support (17) à partir du casier de stockage (25) et vers celui-ci, un dispositif élévateur (19) pour le dispositif de transfert (15), un poste de traitement (11) pour le traitement de meules de fromage (13) et un dispositif transporteur (18) pour le transport de meules de fromage (13) à partir d'un plateau de support (17) vers le poste de traitement (11) et leur retour sur un plateau de support (17), caractérisée par un poste de déchargement (14) pour décharger du plateau de support (17) une meule de fromage à traiter (13) et l'acheminer vers le poste de traitement, et par un poste de chargement (16) pour charger la meule de fromage traitée (13) sur un plateau de support vide (17).

6. Machine selon la revendication 5, caractérisée en ce que le dispositif de transfert (15) présente un chariot (47) qui peut être entraîné par un mécanisme d'entraînement de chariot (53) et sur lequel est montée au moins une bande transporteuse (49) qui peut être entraînée par un mécanisme d'entraînement de bande transporteuse (55), le chariot (47) avec la bande transporteuse (49) pouvant être inséré sur une bonne distance dans le casier de stockage (25) pour y prélever ou y déposer un plateau de support (17) avec des meules de fromage (13).

7. Machine selon la revendication 6, caractérisée en ce qu'elle est réalisée de telle manière que lors du transport d'un plateau de support (17) du casier de stockage (25) vers la machine, le dispositif de transfert (15) insère le chariot (47) dans le casier de stockage (25) de telle sorte que la bande transporteuse (49) soit à une certaine distance de la face inférieure du plateau de support (17), après quoi le dispositif élévateur (19) soulève le dispositif de transfert (15) et met la bande transporteuse (49) en contact avec le plateau de support (17).

8. Machine selon la revendication 7, caractérisé en ce qu'elle est réalisée de telle manière qu'à la suite du transport d'un plateau de support (17) de la machine (10) vers le casier de stockage (25), le dispositif élévateur (19) abaisse le dispositif de transfert (15) et mette la bande transporteuse (49) hors de contact avec le plateau de support (17), après quoi le chariot (47) avec la bande transporteuse (49) est ramené en arrière.

9. Machine selon l'une quelconque des revendications 5 à 8, caractérisée en ce que le dispositif de transfert (15) présente un dispositif de serrage (51) qui est mobile en synchronisme avec la bande transporteuse (49) pour saisir un plateau de support (17).

10. Machine selon l'une quelconque des revendications 5 à 9, caractérisée en ce que le dispositif transporteur (18) comprend un dispositif de retournement (27) pour retourner les meules de fromage (13).

11. Machine selon l'une quelconque des revendications 5 à 10, avec des casiers de stockage (25) disposés respectivement à gauche et à droite de la voie de roulement (23) du chariot (21), caractérisée en ce que le dispositif de transfert (15) peut être sorti aussi bien à gauche qu'à droite par rapport à la direction de roulement du chariot (21).

12. Machine selon la revendication 11, caractérisée en ce que le dispositif de transfert (15) est réalisé de telle manière qu'avant le prélevement d'un plateau de support (17) dans le casier de stockage gauche ou droit (25), le dispositif de serrage (51) peut être placé dans une position d'attente gauche ou droite par le mécanisme d'entraînement de bande transporteuse (55).

13. Machine selon l'une quelconque des revendications 5 à 11, caractérisée en ce que le poste de traitement (11) présente, pour chaque meule de fromage (13), au moins une brosse rotative (37, 38) et au moins une buse (39, 40) pour amener un agent lubrifiant pour fromage.

14. Machine selon l'une quelconque des revendications 5 à 11, caractérisée en ce que le dispositif transporteur (18) présente au moins un bras de déchargement (33) pour le déchargement du plateau de support (17) et pour le chargement du dispositif de retournement (29).

15. Machine selon l'une quelconque des revendications 5 à 11, caractérisée en ce que le dispositif transporteur (18) présente un chariot transporteur (35) pour le transport des meules de fromage (13) du poste de traitement (11) vers le poste d'attente (42).

16. Machine selon la revendication 15, caractérisée en ce que le dispositif transporteur (18) présente un bras de chargement (45) pour charger les meules de fromage (13), à partir du poste d'attente (42), sur un plateau de support (17) sur le dispositif de transfert (15).

17. Machine selon la revendication 14 ou 15, caractérisée en ce qu'une table tournante (41) est prévue sur le chariot transporteur (35) pour faire tourner la meule de fromage (13) dans le poste de traitement (11).

18. Machine selon l'une quelconque des revendications 5 à 17, caractérisée par une unité de commande électronique (56) pour la commande de la séquence de mouvements des différents organes de la machine (10).

Fig.1

Fig.2

9

Fig.3